# EUROPÄISCHE PATENTANMELDUNG

(11) **EP 2 921 044 A1**
(43) Veröffentlichungstag der Anmeldung: **23.09.2015**
(21) Anmeldenummer: 14160989.1
(22) Anmeldetag: 21.03.2014
(51) Int. Cl.: A01G 1/00, E01C 13/06

(54) **Fertigrasen und Herstellungsverfahren für einen Fertigrasen**

(71) Anmelder: DOLD Sportflächen GmbH, 78739 Hardt (DE)
(72) Erfinder: Dold, Christof, 78739 Hardt (DE)
(74) Vertreter: Wickord, Wiro

(57) **Zusammenfassung**

Die Erfindung betrifft einen Fertigrasen mit einer von Verstärkungselementen durchsetzten Trägerschicht und in der Trägerschicht verwurzelten Pflanzen, wobei als Verstärkungselemente langzeitbeständige synthetische Verstärkungselemente in die Trägerschicht eingearbeitet sind.

## Beschreibung

Die Erfindung betrifft einen Fertigrasen mit einer von Verstärkungselementen durchsetzten Trägerschicht und in der Trägerschicht verwurzelten Pflanzen.

Ferner betrifft die Erfindung ein Verfahren zur Herstellung eines Fertigrasens, wobei auf eine mineralische Grundschicht eine Trägerschicht aufgebracht und Pflanzensamen in die Trägerschicht eingebracht werden.

Aus der EP 1 111 987 B1 ist ein gattungsgemäßer Fertigrasen bekannt. Der Fertigrasen weist eine im Wesentlichen aus Erde gebildete Trägerschicht mit einer Vielzahl von hierin vorgesehenen faserigen Verstärkungselementen auf. Die Verstärkungselemente sind beispielsweise aus bindfadenartigen Kokosfasern und auf jeden Fall aus natürlich zersetzbaren faserigen Elementen gebildet. Neben Kokos kommen beispielsweise Flachs oder Hanf infrage. Vorgesehen ist, dass die faserigen Verstärkungselemente dem Fertigrasen beim Schälen und Verlegen eine erhöhte Stabilität geben. Insofern sieht die Erfindung vor, dass sich die faserigen Verstärkungselemente innerhalb eines Zeitraums von drei bis 36 Monaten durch natürliche Zersetzungsprozesse vollständig abbauen.

Nach dem Abbau der faserigen Verstärkungselemente ist die erhöhte Stabilität des Fertigrasens nicht mehr gegeben.

Aufgabe der vorliegenden Erfindung ist es, einen Fertigrasen derart weiterzubilden, dass dauerhaft eine verbesserte Stabilität bereitgestellt wird und sich die Handhabung des Fertigrasens verbessert.

Zur Lösung der Aufgabe ist die Erfindung in Verbindung mit dem Oberbegriff des Patentanspruchs 1 dadurch gekennzeichnet, dass als Verstärkungselemente langzeitbeständige synthetische Verstärkungselemente in die Trägerschicht eingearbeitet sind.

Der besondere Vorteil der Erfindung besteht darin, dass die synthetischen Verstärkungselemente gerade nicht natürlich zersetzt werden und insofern dauerhaft in der Trägerschicht verbleiben. Der Fertigrasen hat demzufolge dauerhaft eine zusätzliche Stabilität beziehungsweise Festigkeit. Der Rasen kann deswegen nach dem Heranwachsen gut geschält werden. Er bietet darüber hinaus gute Verlegeeigenschaften. Zusätzlich verbessert sich dauerhaft die Stabilität und Widerstandsfähigkeit des Fertigrasens während der Benutzung. Dies bietet beispielsweise bei stark strapazierten Rasenflächen, insbesondere bei Rasensportflächen, erhebliche Vorteile, da die Nutzungsdauer des Rasens erhöht wird beziehungsweise der Pflegeaufwand sinkt. Des Weiteren kann der erfindungsgemäße Fertigrasen für den Fall eines Defekts dauerhaft in einfacher Weise instand gesetzt werden. Da die Verstärkungselemente dauerhaft in der Trägerschicht verbleiben, können einzelne Fehlstellen im Rasen auch Jahre nach dem Verlegen ausgebessert werden, indem im Bereich der Fehlstellen der Fertigrasen abgeschält und durch ein neues Fertigrasenstück ersetzt wird.

Weiterhin vereinfacht sich die Handhabung des Rasens insbesondere bei der Verarbeitung. Darüber hinaus sinkt das spezifische Gewicht des Fertigrasens und es vereinfacht sich der Transport. Ferner verbessert sich die Elastizität des Fertigrasens durch das Vorsehen der synthetischen Verstärkungselemente. Die synthetischen Verstärkungselemente wirken einer Verdichtung des Fertigrasens auch bei einer intensiven Beanspruchung - insbesondere bei einer Verwendung als Sportrasen-entgegen. Die Wurzeln der Pflanzen können daher dauerhaft gut mit Wasser und Sauerstoff versorgt werden. Insofern ergeben sich auch eine gesteigerte Vitalität und eine verbesserte Versorgung der Pflanzen mit Sauerstoff

Nach einer bevorzugten Ausführungsform der Erfindung sind in der Trägerschicht synthetische Vlieshäcksel vorgesehen. Die synthetischen Vlieshäcksel sind flächig ausgebildet. Die Wurzeln der Pflanzen wachsen durch die Vlieshäcksel mit der Folge, dass die Wurzeln Halt bekommen und sich in der Fläche eine hohe Stabilität bildet. Zudem begünstigt das Vorsehen der synthetischen Vlieshäcksel das Wachstum der Pflanzen und die Versorgung der Pflanzen mit Feuchtigkeit. Die Vlieshäcksel sind in der Lage, Feuchtigkeit und insbesondere Regenwasser zu absorbieren und den Wurzeln der Pflanzen zur Verfügung zu stellen. Dabei saugen sich die Vlieshäcksel anders als typische textile Stoffe nicht mit der Feuchtigkeit voll. Dem Risiko einer Überversorgung der Wurzeln mit Feuchtigkeit ist demzufolge vorgebeugt.

Nach einer Weiterbildung der Erfindung sind Synthetikfasern als Verstärkungselemente in der Trägerschicht vorgesehen. Die Synthetikfasern sind insbesondere fadenartig und langgestreckt ausgebildet. Die Synthetikfasern sorgen für eine schnelle Vernetzung der Wurzeln und verbessern so die Stabilität. Die Synthetikfasern wirken von Beginn an wurzelähnlich und geben der Trägerschicht halt.

Beispielsweise bestehen die Synthetikfasern beziehungsweise die synthetischen Vlieshäcksel aus Polypropylen. Beispielsweise können die synthetischen Verstärkungselemente aus Polyester hergestellt sein, oder dem Polypropylen ist Polyester in geringem Umfang beigemischt. Die Synthetikfasern sind langgesteckt ausgebildet. Sie weisen eine Länge von zirka 10 bis 30 mm, bevorzugt eine Länge von 12 bis 20 mm auf. Die synthetischen Vlieshäcksel sind flächig ausgebildet. Eine Abmessung der synthetischen Vlieshäcksel liegt im Bereich von 30 mm oder weniger.

Nach einer Weiterbildung der Erfindung kann Lava als Bestandteil der Trägerschicht vorgesehen sein. Insbesondere kann Lava in Granulatform in die Trägerschicht eingebracht werden. Das Vorsehen von Lava beziehungsweise Lavagranulat begünstigt die Speicherung von Feuchtigkeit beziehungsweise Wasser. Die in den Lavaporen gespeicherte Feuchtigkeit kann dann an die synthetischen Verstärkungselemente, insbesondere an die Vlieshäcksel abgegeben werden. Insofern werden die Wurzeln der Pflanzen auch in trockenen Zeiten gut mit Wasser versorgt. Darüber hinaus bleibt der Fertigrasen auf Dauer stabil und in gutem Zustand, da er sich nach einer starken Beanspruchung selbst regenerieren kann. Das Lavagranulat wirkt insbesondere als Stützkorn und erhöht die Scherfestigkeit der Trägerschicht. Insgesamt wird so die Vitalität der Pflanzenwurzel begünstigt.

Als weitere Bestandteile der Trägerschicht können neben Sand beispielsweise Torf und Kompost vorgesehen werden. Insbesondere kann zum Aufbau der Trägerschicht ein Substrat verwendet werden, in dem zirka 50 bis 80 Gewichts-% Quarzsand, zirka 3 bis 6 Gewichts-% synthetische Verstärkungselemente, zirka 10 bis 30 Gewichts-% sandiger Oberboden beziehungsweise Mutterboden sowie zirka 10 bis 30 Gewichts-% Lava sowie optional 3 bis 8 Gewichts-% Torf beziehungsweise Kompost vorgesehen sind. Der Quarzsand weist eine Körnung auf im Bereich von 0,05 bis 2,5 mm, bevorzugt im Bereich von 0,06 bis 2 mm. Der Quarzanteil beträgt vorzugsweise 85 bis 95 %. Die synthetischen Vlieshäcksel sind bevorzugt mittels Schreddern hergestellt. Ein flächenbezogener Anteil der Vlieshäcksel beträgt zirka 80 bis 800 g/m², bevorzugt 100 bis 400 g/m². Die Lava weist eine Körnungsgröße im Bereich von 0 bis 8 mm auf. Bevorzugt beträgt die Körnung der Lava 0 bis 3 mm. Das Substrat mit den verschiedenen Bestandteilen wird vorgemischt und ist als solches ein erfindungswesentlicher Teil des Fertigrasens.

Zur Lösung der Aufgabe weist das erfindungsgemäße Verfahren die Merkmale des unabhängigen Patentanspruchs 8 auf. Nach einer vorteilhaften Weiterbildung des erfindungsgemäßen Verfahrens können als synthetische Verstärkungselemente Synthetikfasern und/oder synthetischer Vlieshäcksel in die Trägerschicht eingearbeitet werden. Vorteilhaft begünstigt das Vorsehen der synthetischen Fasern in einer ersten Wuchsphase des Rasens eine sehr schnelle Vernetzung der Wurzeln der Pflanze. In einer zweiten Wuchsphase wachsen die Wurzeln in die flächig erstreckten Vlieshäcksel ein. Hierdurch erhöht sich die Widerstandsfähigkeit des Rasens auf Dauer. Darüber hinaus verleihen die synthetischen Verstärkungselemente dem Rasen während der Benutzung ein hohes Maß an Widerstandsfähigkeit. Insbesondere hochstrapazierte Rasenflächen, beispielsweise Rasensportflächen, können nach dem erfindungsgemäßen Verfahren vorteilhaft bereitgestellt werden.

Nach einer Weiterbildung der Erfindung wird zum Herstellen des Fertigrasens die Trägerschicht mithilfe eines Werkzeugs flächig von der mineralischen Grundschicht geschält. Eine Dicke der Trägerschicht wird so gewählt, dass wenigstens 80 % der synthetischen Verstärkungselemente und bevorzugt 90 % der synthetischen Verstärkungselemente oder mehr nach dem Schälen in der Trägerschicht verbleiben.

Da die synthetischen Verstärkungselemente nicht natürlich zersetzt werden, verbleiben sie dauerhaft im Fertigrasen. Dies bedeutet, dass der verlegte Fertigrasen während der Benutzung dauerhaft stabilisiert ist und auch bei hohen Beanspruchungen widerstandsfähig bleibt. Zusätzlich begünstigt das dauerhafte Vorsehen der synthetischen Verstärkungselemente die Wartung und Instandsetzung des Rasens. Einzelne defekte Rasenstücke beziehungsweise Fehlstellen im Rasen können auch nach Jahren herausgeschält oder anderweitig entfernt werden und durch neuen Fertigrasenstücke ersetzt werden.

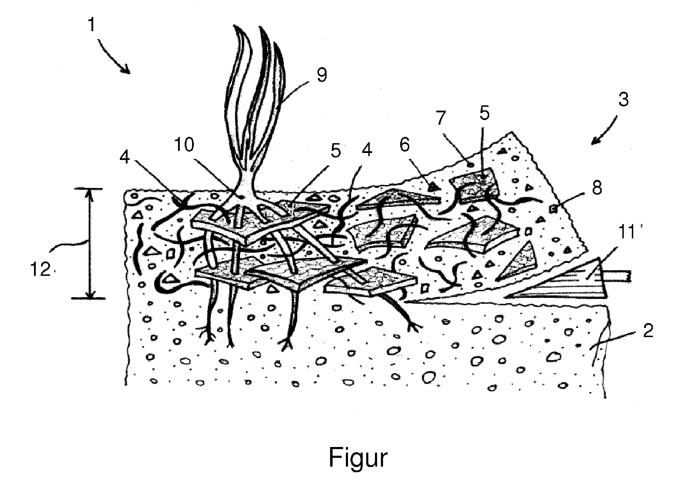

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details des Fertigrasens gelten selbstverständlich auch im Zusammenhang mit dem erfindungsgemäßen Verfahren und umgekehrt. So kann auf die Offenbarung zu den einzelnen Erfindungsaspekten stets wechselseitig Bezug genommen werden. Die Zeichnung dient lediglich beispielhaft der Klarstellung der Erfindung und hat keinen einschränkenden Charakter.

Die Figur zeigt ein bevorzugtes Ausführungsbeispiel eines erfindungsgemäßen Fertigrasens 1. Der Fertigrasen 1, welcher nach Art einer Dicksole ausgeführt ist, ist auf einer mineralischen Grundschicht 2 gebildet. Eine Trägerschicht 3 des Fertigrasens 1 sieht als synthetische Verstärkungselemente synthetische Fasern 4 sowie synthetische Vlieshäcksel 5 vor. Die synthetischen Fasern 4 sind fadenartig ausgebildet und im Wesentlichen chaotisch verteilt in der Trägerschicht 3. Die synthetischen Vlieshäcksel 5 sind flächig erstreckt. Als weitere Komponenten der Trägerschicht 1 sind Lava 6 sowie Sand 7 vorgesehen. Die Lava 6 kann insbesondere in granularer Form vorgesehen werden. Zusätzlich ist Torf 8 in der Trägerschicht 3 eingearbeitet.

Als Teil des Fertigrasens 1 sind darüber hinaus in der Trägerschicht 3 verwurzelte Pflanzen 9 vorgesehen. Wurzeln 10 der Pflanzen 9 durchsetzen die Trägerschicht 3 und sind vernetzt insbesondere mit den synthetischen Fasern 4 und den synthetischen Vlieshäckseln 5. Die Wurzeln 10 durchdringen insbesondere die synthetischen Vlieshäcksel 5.

Mithilfe eines Schälwerkzeugs 11 wird der Fertigrasen 1 von der mineralischen Grundschicht 2 abgetrennt. Eine Dicke 12 der Trägerschicht 3 beträgt insbesondere 6 cm oder weniger. Die Schnittführung erfolgt so, dass beim Trennen 80 % oder mehr der synthetischen Fasern 4 beziehungsweise der synthetischen Vlieshäcksel 5 in der Trägerschicht 3 verbleiben.

Als Teil der Trägerschicht 3 können des Weiteren nicht dargestellte organische Verstärkungselemente, beispielsweise faserige Verstärkungselemente aus pflanzlichen Stoffen, vorgesehen sein.

## Patentansprüche

1. Fertigrasen (1) mit einer von Verstärkungselementen durchsetzten Trägerschicht (3) und in der Trägerschicht (3) verwurzelten Pflanzen (9), **dadurch gekennzeichnet, dass** als Verstärkungselemente langzeitbeständige synthetische Verstärkungselemente in die Trägerschicht (3) eingearbeitet sind.

2. Fertigrasen (1) nach Anspruch 1, **dadurch gekennzeichnet, dass** als synthetische Verstärkungselemente synthetische Vlieshäcksel (5) vorgesehen sind.

3. Fertigrasen (1) nach Anspruch 1 oder 2, **dadurch gekennzeichnet, dass** als synthetische Verstärkungselemente Synthetikfasern (4) in die Trägerschicht (3) eingearbeitet werden.

4. Fertigrasen (1) nach einem der Ansprüche 1 bis 3, **dadurch gekennzeichnet, dass** als langzeitbeständige Synthetikfasern (4) PP-Fasern vorgesehen sind.

5. Fertigrasen (1) nach einem der Ansprüche 1 bis 4, **dadurch gekennzeichnet, dass** Lava (6) und/oder Torf (8) als Bestandteile der Trägerschicht (3) vorgesehen sind.

6. Fertigrasen (1) nach einem der Ansprüche 1 bis 5, **dadurch gekennzeichnet, dass** Sand (7) als Bestandteil der Trägerschicht (3) vorgesehen ist.

7. Verfahren zur Herstellung eines Fertigrasens (1), insbesondere eines Fertigrasens (1) nach einem der Ansprüche 1 bis 6, wobei auf eine mineralische Grundschicht (2) eine Trägerschicht (3) aufgebracht und Pflanzensamen in die Trägerschicht (3) eingebracht werden, **dadurch gekennzeichnet, dass** in die Trägerschicht (3) langzeitbeständige synthetische Verstärkungselemente eingearbeitet werden.

8. Verfahren nach Anspruch 7, **dadurch gekennzeichnet, dass** die langzeitstabilen synthetischen Verstärkungselemente in die Trägerschicht (3) eingearbeitet werden, bevor der Grassamen in die Trägerschicht (3) eingearbeitet wird.

9. Verfahren nach Anspruch 7 oder 8, **dadurch gekennzeichnet, dass** als synthetische Verstärkungselemente synthetische Vlieshäcksel (5) und/oder Synthetikfasern (4) in die Trägerschicht (3) eingearbeitet werden.

10. Verfahren nach einem der Ansprüche 7 bis 9, **dadurch gekennzeichnet, dass** zum Gewinnen des Fertigrasens (1) die Trägerschicht (3) mithilfe eines Werkzeugs flächig von der mineralischen Grundschicht (2) geschält wird, wobei eine Dicke (12) der Trägerschicht (3) so gewählt wird, dass wenigstens 80 % der synthetischen Verstärkungselemente und bevorzugt 90 % der synthetischen Verstärkungselemente oder mehr in der Trägerschicht (3) verbleiben.

11. Verfahren nach einem der Ansprüche 7 bis 10, **dadurch gekennzeichnet, dass** die Trägerschicht (3) vom mineralischen Boden getrennt wird, nachdem sich aus den Pflanzensamen in der Trägerschicht (3) verwurzelte Pflanzen (9) gebildet haben, wobei die Verstärkungselemente von den Wurzeln (10) umschlungen und/oder durchwachsen sind.

12. Verwendung eines Fertigrasens (1) nach einem der Ansprüche 1 bis 6-7 und/oder ein nach einem Verfahren nach einem der Ansprüche 7 bis 11 hergestellten Fertigrasen (1) als Sportrasen für Rasensportplätze.
